(19) Europäisches Patentamt
European Patent Office
Office européen des brevets

(11) Publication number: 0 336 668
A2

(12) EUROPEAN PATENT APPLICATION

(21) Application number: 89303241.7

(22) Date of filing: 03.04.89

(51) Int. Cl.[4]: C08L 23/12 , C08K 5/02 , C08L 71/04

(30) Priority: 04.04.88 US 177112

(43) Date of publication of application: 11.10.89 Bulletin 89/41

(84) Designated Contracting States: AT BE CH DE ES FR GB GR IT LI LU NL SE

(71) Applicant: ETHYL CORPORATION
451 Florida Boulevard
Baton Rouge, LA 70801(US)

(72) Inventor: Schleifstein, Robert Alane
17861 Stones River Avenue
Baton Rouge Louisiana 70817(US)

(74) Representative: Collier, Jeremy Austin Grey et al
J.A.Kemp & Co. 14, South Square Gray's Inn
London WC1R 5EU(GB)

(54) **Flame retardant polypropylene based formulations.**

(57) A flame retardant polypropylene based formulation which contains polypropylene and a flame retardant amount of halogenated polyphenyl ether and a hexabromocyclododecane.

EP 0 336 668 A2

## FLAME RETARDANT POLYPROPYLENE BASED FORMULATIONS

This invention relates to novel flame retardant polypropylene based formulations. For the purposes of this invention "polypropylene" shall mean the isotactic homopolymer formed from propylene or the block copolymer of such isotactic homopolymer and polyethylene. The block copolymer will generally contain up to 94% homopolypropylene segments. Such homopolymers and block copolymers are well-known to those skilled in the art.

Polypropylene based formulations have proven to be commercially important for use in the production of film, injection and blow molded articles, extruded pipe, wire insulation and fibers. For many of these uses, it is important that the resultant product have a flame retardant quality.

Flame retardancy can be obtained by including a flame retardant compound and an inert filler in the formulation. The flame retardant compound is generally a brominated hydrocarbon which can be used alone or with a synergist, such as $Sb_2O_3$. The inert filler can be, e.g., talc, mica, silica, clay, or chalk so long as the filler is inert to the formulation and not a ready fuel source. While such formulations may be useful, they are not ideal since, to obtain a UL 94 rating of V-0, the amount of flame retardant and the amount of inert filler used in the formulation is generally high, e.g., about 75 wt.% flame retardant, 10 wt.% $Sb_2O_3$ and about 15 wt.% inert filler, based upon the total weight of the formulation. The high amount of flame retardant adds to the expense of the formulation while the high amount of filler adversely affects some of the physical properties of articles produced from the formulation. For example, the stiffness of the molded article is greatly increased, while its surface gloss is decreased when high amounts of inert filler are present.

There are some brominated hydrocarbon flame retardants which can provide the flame retardant quality needed without either the use of high amounts of flame retardant or inert filler in the formulation, e.g., tetrabromobisphenol-A bis(2,3-dibromopropylether). Such flame retardants, however, are generally expensive.

It is therefore an object of this invention to provide economical flame retardant polypropylene based formulations which do not require high amounts of flame retardant and/or inert filler. It is another object of this invention to provide articles molded from such formulations.

The novel flame retardant polypropylene based formulations of this invention comprise polypropylene and a flame retardant amount of hexabromocyclododecane and a halogenated polyphenyl ether of the formula:

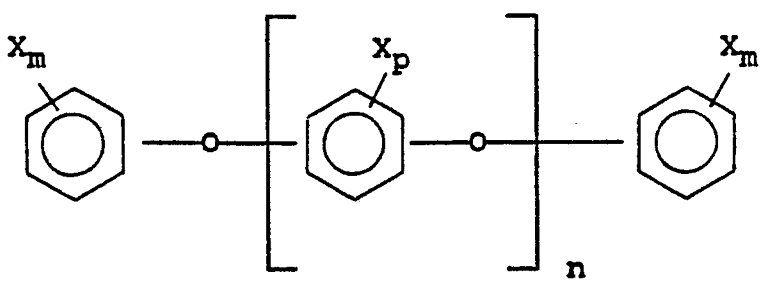

wherein each X is independently Cl or Br, each m is independently an integer of 0 to 5, each p is independently an integer of 0 to 4, n is an integer of 1 to 5 and 50% of more, by weight, of the compound is halogen. The term "polypropylene based" means that the formulation contains at least 40 wt.% polypropylene, as hereinabove defined, based upon the total weight of the formulation.

It has been found, as shown in the examples, that the unique combination of the above-described halogenated polyphenyl ether and hexabromocyclododecane provides a synergistic effect in the formulation of this invention. While the halogenated polyphenyl ether and the hexabromocyclododecane of this invention are well known as individual flame retardants in some thermoplastic formulations, their combined effect in polypropylene based formulations is unique and highly advantageous. The synergism between these two compounds provides excellent flame retardancy without the utilization of a filler in the formulation and with the use of only moderate amounts of these compounds.

The preferred halogenated polyphenyl ethers or those which are brominated and in which m = 5 and p = 4. Most highly preferred is tetradecabromodiphenoxy benzene. The halogenated polyphenyl ethers of this invention and a process for their manufacture are disclosed in U. S. 3,760,003.

The hexabromocyclododecane constituent is preferably 1,2,5,6,9,10-hexabromocyclododecane. Hexabromocyclododecane can be produced by the process disclosed in U. S. 3,558,727.

It is also preferred that the hexabromocyclododecane be thermally stabilized by the use of a thermal stabilizer such as dibutyltin diisooctylmercaptoacetate or dibutyltin maleate. These stabilizers are used in conventional amounts. A particularly preferred stabilizer is dibutyltin dimercaptododecane.

The formulation of this invention can advantageously also include a synergistic amount of a compound such as $Sb_2O_3$, $Bi_2O_3$, $MoO_3$, $ZrO_2$ or mixtures thereof. These compounds are well recognized in the art as enhancing the flame retardant qualities of most brominated flame retardant compounds. Of these enhancing compounds, a most preferred is antimony trioxide in an amount of from 2 wt.% to 6 wt.%.

The polypropylene based formulations of this invention will generally contain from 40 to 90 wt.% polypropylene. Preferred formulations, due to their good physical qualities, will contain from 80 to 88 wt.% polypropylene. The minimum amounts of halogenated polyphenyl ether and hexabromocyclododecane used in the formulations of this invention to obtain a UL 94 V-0 rating are determined empirically as these amounts are dependent upon the particular polypropylene and the amounts, if any, of the synergistic flame retardant enhancing compound, e.g. $Sb_2O_3$, present in the formulation. The presence of a flame retardant enhancing compound is preferred as a reduction in the needed amounts of halogenated polyphenyl ether and hexabromocyclododecane is realized. However, due to the density of these flame retardant enhancing compounds, there is an economic limit on their amounts in the formulation from the standpoint of the molder. Generally, a 3 to 5 wt.% loading of these compounds is preferred, with about 4 wt.% being most preferred. In regard to the halogenated polyphenyl ether and hexabromocyclododecane, a starting point in determining their minimum amounts in a formulation containing a flame retardant enhancing compound is to provide a sufficient amount of each to give a total of from 8 to 12 wt.%, with from 3 to 5 wt.% being halogenated polyphenyl ether and from 5 to 7 wt.% being hexabromocyclododecane. When the polypropylene is a copolymer, such as Himont Inc',s Profax® 7523, the amount of hexabromocyclododecane used should be from the upper end of the 5 to 7 wt.% range. See Example VI in which 7 wt.% of Saytex® HBCD flame retardant was present in a formulation used to produce a plaque having a UL 94 V-0 rating. Amounts of halogenated polyphenyl ether and hexabromocyclododecane which are larger than the minimum amounts needed can be used if desired.

The formulations of this invention may be conventionally formed by intimately mixing the ingredients thereof by any suitable means, e.g., by employing an extruder, a two-roll mill or a Banbury mixer.

After the formulation has been formed, it may be utilized in forming molded or extruded articles which have a good flame retardant quality and have good physical properties. Conventional compression molding, injection molding, or extruding devices are suitable for use, the only criticality being that the molding and extruding processes not involve temperatures or other conditions which would adversely affect the formulation.

The formulation of this invention may also contain pigments, plasticizers, antioxidants or other conventional additives. In addition, the formulations of this invention may contain inert fillers. However, the amount of inert filler used should be kept low, say below 3 wt.%, as loadings of only 6 wt.% clay have been found to degrade UL-94 ratings from V-0 to V-2. In essence, the formulations of this invention are substantially filler-free.

Examples I-V are comparative examples and are not of this invention.

## Example I

This is a base line example in which a formulation containing 100 wt.% polypropylene (Profax® 6423, sold by Himont, Inc.) was compression molded to form a test plaque. The compression molding was performed conventionally using a molding temperature of 175° C. and a molding pressure of 250 psi (1724 kPa). The test plaque was submitted to Underwriters Laboratories UL 94 vertical burning test (American National Standard ANSI/UL 94-1979, "UL 94 Standard for Tests for Flammability of Plastic Materials for Parts in Devices and Appliances", copyright Underwriters Laboratories Inc.) The material burned.

In the following examples the formulations were prepared by intimately mixing the indicated constituents in a Brabender mixer.

## Example II

A test plaque was made from a formulation containing 10 wt.% of Ethyl Corporation's Saytex® 120 flame retardant (tetradecabromodiphenoxy benzene), 4 wt.% antimony trioxide and 86 wt % Profax 7523 polypropylene. The same procedures used in Example I were used in molding and testing the plaque. A UL 94 rating of V-2 was obtained.

Example III

A test plaque was molded and tested in accordance with Example I. For this example, the formulation from which the test plaque was made contained 22 wt.% Saytex® 120, 6 wt.% antimony trioxide, 14 wt.% clay filler and 58 wt.% Profax® 6423. The UL 94 rating for this plaque was V-0.

Example IV

A test plaque was molded and tested in accordance with Example I. The formulation used contained 9.2 wt.% of Ethyl Corporation's Saytex® HBCD flame retardant (hexabromocyclododecane), 4 wt.% antimony trioxide and 86.4 wt.% Profax® 7523. A UL 94 rating of V-2 was obtained.

The following examples are illustrative of this invention.

Example V

A test plaque made from a formulation containing 5 wt.% Saytex® 120, 5 wt.% Saytex® HBCD, 4 wt.% antimony trioxide and 86 wt.% Profax® 6423. No inert filler was used. The molding and testing procedures of Example I were used, respectively, to form and test the plaque. A UL 94 rating of V-0 was obtained.

Example VI

A test plaque was made from a formulation containing 3 wt.% Saytex® 120, 7 wt.% Saytex® HBCD, 4 wt% antimony trioxide and 86 wt.% Profax® 7523. No inert filler was used. The formulation was prepared by use of a twin screw extruder. The plaque was formed by compression molding using the procedure described in Example I. The plaque had a UL 94 rating of V-0.

As can be seen from Example V and VI, a UL 94 rating of V-0 can be obtained for polypropylene based formulations without the necessity of using a large amount of flame retardant material and an inert filler. On a wt.% basis, the formulations of this invention use less total halogenated polyphenyl ether and hexabromocyclododecane to obtain a V-0 rating than is the case when either of these two compounds are used singularly with a filler to obtain the same V-0 rating.

Example VII

A test plaque formed from the formulation of Example VI had a flexural modulus of 144,000 psi (993,000kPa) as measured by ASTM D-790 and an observed glossy surface.

As can be seen, obtainment of good flame retardancy does not unduly affect the physical properties measured.

## Claims

1. A flame retardant polypropylene based formulation comprising:
(a) polypropylene;

(b) a flame retardant amount of,
(i) a halogenated polyphenyl ether of the formula:

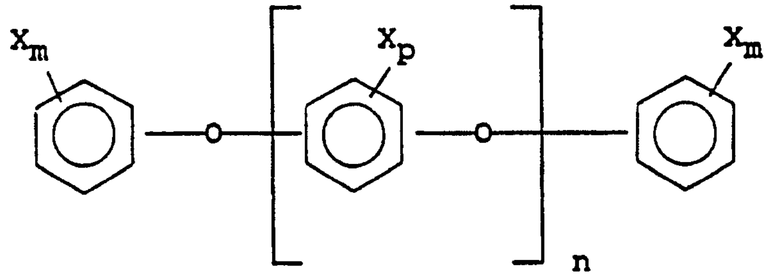

wherein each X is independently Cl or Br, each m is independently an integer of 0 to 5, each p is independently an integer of 0 to 4, n is an integer of 1 to 5 and 50% of more, by weight, of the compound is halogen, and
(ii) hexabromocyclododecane, said flame retardant amount being that amount of said halogenated polyphenylene ether and said hexabromocyclododecane which, in combination, gives said formulation a UL-94 rating of V-0; and
(c) optionally, an inert filler, said filler being present in an amount incapable of degrading said UL-94 rating of V-0 to V-2.

2. The formulation of claim 1 wherein each of said X's is bromine, m = 5, p = 4 and n = 1.
3. The formulation of claim 1 wherein said halogenated polyphenyl ether is tetradecabromodiphenoxy benzene.
4. The formulation of claim 1, 2 or 3 wherein said hexabromocyclododecane is 1,2,5,6,9,10-hexabromocyclododecane.
5. The formulation of any of claims 1 to 4 wherein said formula tion additionally contains a synergistic amount of $Sb_2O_3$, $Bi_2O_3$, $MoO_3$, $ZrO_2$ or mixtures thereof.
6. The formulation of any of claims 1 to 4 wherein said formula tion additionally contains a synergistic amount of $Sb_2O_3$.
7. The formulation of claim 6 wherein said formula tion additionally contains $Sb_2O_3$ in an amount within the range of from 2 wt.% to 6 wt.%.
8. The formulation of any of claims 1 to 7 wherein said formulation additionally contains a stabilizing amount of a thermal stabilizer.
9. A molded or extruded article formed from the formulation of any of claims 1 to 8.
10. A process for preparing a polypropylene based formulation having a UL-94 rating of V-0, said process comprising intimately mixing together the following:
(a) from about 80 weight percent to about 88 weight percent polypropylene;
(b) a flame retardant amount of,
(i) a halogenated polyphenyl ether of the formula:

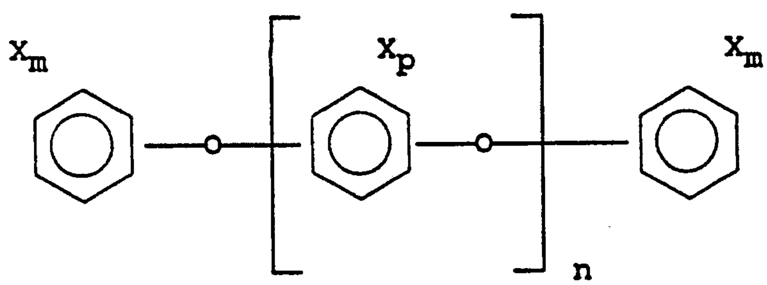

wherein each X is independently Cl or Br, each m is independently an integer of 0 to 5, each p is independently an integer of 0 to 4, n is an integer of 1 to 5 and 50% of more, by weight, of the compound is halogen, and
(ii) hexabromocyclododecane, said flame retardant amount being that amount of said halogenated polyphenylene ether and said hexabromocyclododecane which, in combination, gives said formulation a UL-94

rating of V 0; and

(c) optionally, an inert filler, said filler being present in an amount incapable of degrading said UL-94 rating of V-0 to V-2.